# EUROPÄISCHE PATENTSCHRIFT

(11) **EP 2 718 065 B1**
(45) Veröffentlichungstag und Bekanntmachung des Hinweises auf die Patenterteilung: **26.08.2015**
(21) Anmeldenummer: 12716416.8
(22) Anmeldetag: 23.04.2012
(51) Int. Cl.: B25H 7/00, B62M 6/40, B62J 99/00

(54) **VERFAHREN UND VORRICHTUNG ZUR VERSCHLEIßERKENNUNG AN EINEM ELEKTROFAHRRAD**
METHOD AND DEVICE FOR DETECTING WEAR ON AN ELECTRIC BICYCLE
PROCÉDÉ ET DISPOSITIF DE DÉTECTION D'USURE SUR UNE BICYCLETTE ÉLECTRIQUE

(30) Priorität: 08.06.2011 DE 102011077181
(43) Veröffentlichungstag der Anmeldung: 16.04.2014
(73) Patentinhaber: Robert Bosch GmbH, 70442 Stuttgart (DE)
(72) Erfinder: GERUNDT, Oliver, 71292 Friolzheim (DE); DASBACH, Gregor, F-14120 Mondeville (FR); IMMENDOERFER, Ingo, 71732 Tamm (DE); DIEKMANN, Ralf, 71679 Asperg (DE)
(86) Internationale Anmeldenummer: PCT/EP2012/057411
(87) Internationale Veröffentlichungsnummer: WO 2012/167987

(56) Entgegenhaltungen:
- EP-A1- 2 149 721
- WO-A1-2005/080134
- DE-A1- 10 116 743
- FR-A1- 2 938 233

## Beschreibung

### Stand der Technik

Die Erfindung betrifft ganz allgemein ein Verfahren beansprucht in Anspruch 1, und eine Vorrichtung beansprucht in Anspruch 17, zur Verschleißerkennung an mindestens einer Komponente eines Elektrofahrrads.

Die Erfindung betrifft ein Verfahren zur Erkennung von Verschleiß am Kettenantrieb eines Elektrofahrrads, wobei der Kettenantrieb einen Elektromotor umfasst, der mindestens eine Antriebswelle mit mindestens einem Kettenrad antreibt, mindestens eine Abtriebswelle, die ebenfalls mit mindestens einem Kettenrad ausgestattet ist, und mindestens eine geschlossene Kette, die über ein Kettenrad der Antriebswelle und ein Kettenrad der Abtriebswelle geführt ist, so dass die Kette das auf die Antriebswelle wirkende Drehmoment auf die Abtriebswelle überträgt.

Viele Komponenten eines Fahrrads sind nicht dauerfest, sondern nur betriebsfest ausgelegt und müssen deshalb regelmäßig gewartet oder sogar ausgetauscht werden. So sollten beispielsweise die Bremsen und die Fahrradbeleuchtung regelmäßig gewartet werden, um die Betriebssicherheit des Fahrrads zu gewährleisten. Auch andere Komponenten, wie z.B. der Rahmen, unterliegen einer Abnutzung bzw. Ermüdung, die zu einer Beeinträchtigung der Verkehrssicherheit des Fahrrads führen kann. Bei einigen Fahrradkomponenten, wie z.B. den Bremsen, der Schaltung und der Fahrradgabel, sind deshalb Wartungsintervalle vorgeschrieben. Diese festen Zeitintervalle sind aber nicht an die tatsächliche, individuelle Belastung und Abnutzung des Fahrrads angepasst.

Der Wirkungsgrad des Antriebs eines Elektrofahrrads hängt wesentlich vom Zustand der Kette, der Kettenblätter und Ritzel ab. Als Fahrradkette werden in der Praxis meist Rollen-Hülsenketten oder Lagerkragenketten benutzt. Beim Betrieb tritt im Innern der Kette, insbesondere zwischen den Hülsen bzw. Lagerkragen und den entsprechenden Rollen, eine Verschleißreibung auf, die zu einer Vergrößerung der Kettenteilung und im Ergebnis zu einer Verlängerung der Kette führen. Da die Teilung der Kette dann nicht mehr auf den Zahnabstand der Kettenräder, d.h. des Kettenblatts und Ritzels, abgestimmt ist, sinkt der Wirkungsgrad der Drehmomentübertragung. Außerdem werden die Kettenräder verstärkt abgenutzt. Dabei hängt der Verschleiß wesentlich vom Verschmutzungsgrad der Kette und der Kettenräder ab, da Dreck wie ein Schleifmittel wirkt. Nur bei frühzeitigem Wechsel der Kette können Ritzel und Kettenblätter weiterverwendet werden.

Die regelmäßige Überprüfung und Wartung der Kette kommt also nicht nur dem Wirkungsgrad des Kettenantriebs zu Gute. Auch die Laufleistung von Kette und Kettenrädern lässt sich dadurch deutlich verbessern.

Bei nach Norm gefertigten Kettenblättern kann der Kettenverschleiß von Hand geprüft werden. Lässt sich die Kette um mehr als 5mm vom Zahnkranz abheben, ist die Verschleißgrenze erreicht, und die Kette sollte ausgetauscht werden. Mit Hilfe einer Kettenlehre oder einem Kettenkaliber kann eine Verschleißprüfung unabhängig von der Art des Kettenblatts vorgenommen werden. Dabei wird die Länge der Kette über eine definierte Anzahl von Kettengliedern gemessen. Beide Verfahren basieren auf einer manuellen Prüfung und können nicht bei laufendem Betrieb, d.h. während der Fahrt, durchgeführt werden. Die Prüfverfahren erfordern Fachkenntnisse und werden nicht zwangsläufig regelmäßig durchgeführt.

Als nächstliegender Stand der Technik wird ein Elektrofahrrad mit einem Kettenantrieb angesehen.

### Offenbarung der Erfindung

Mit der vorliegenden Erfindung wird vorgeschlagen, den Alterungszustand einzelner Komponenten des Elektrofahrrads automatisch zu überwachen, um den Fahrer rechtzeitig auf die Notwendigkeit einer Wartung hinzuweisen.

Dazu wird der Betriebszustand mindestens einer ausgewählten Komponente mit Hilfe mindestens eines Sensors überwacht. Dabei wird die Belastung dieser Komponente über die Betriebsdauer des Elektrofahrrads erfasst. Erfindungsgemäß wird dem Fahrer die Notwendigkeit der Wartung auf einer Anzeigeeinheit angezeigt, sobald eine für die Komponente definierte Dauerbelastungsschwelle erreicht ist.

Das erfindungsgemäße Verfahren eröffnet die Möglichkeit, die Wartungsintervalle bedarfsgerecht zu wählen, also in Abhängigkeit von der tatsächlich auftretenden Abnutzung der überwachten Komponente. Dadurch kann die Wartung eines Elektrofahrrads sehr effizient gestaltet werden. Durch rechtzeitig vorgenommene Wartungsmaßnahmen wird die Lebensdauer des Gesamtsystems verlängert. Außerdem beugen rechtzeitig durchgeführte Wartungsmaßnahmen einem Ausfall oder einer Funktionseinschränkung der überwachten Komponente während der Fahrt vor. Damit trägt das erfindungsgemäße Verfahren wesentlich dazu bei, die Verkehrssicherheit des Elektrofahrrads zu gewährleisten.

Zur Durchführung des erfindungsgemäßen Verfahrens wird ein Elektrofahrrad mit mindestens einem Sensor zum Überwachen des Betriebszustands mindestens einer Komponente ausgestattet. Mit Hilfe dieses Sensors wird die Belastung der überwachten Komponente erfasst. Des Weiteren umfasst die erfindungsgemäße Vorrichtung zur Verschleißerkennung eine Auswerteeinheit zur Auswertung des Sensorsignals, wobei die Auswerteeinheit einen Speicher zum Abspeichern der aufsummierten Belastungen umfasst. Mindestens eine Anzeigeeinheit dient zur Wiedergabe von Wartungsinformationen, wenn eine vorgegebene Dauerbelastungsschwelle für die überwachte Komponente erreicht ist. Dabei kann es sich um eine optische und/oder akustische Anzeigeeinrichtung handeln. Nach erfolgter Wartung kann der Speicher, in dem die Summe der Belastungen abgelegt ist, wieder zurückgesetzt werden, um dem Neuzustand der Komponente Rechnung zu tragen.

An dieser Stelle sei angemerkt, dass die erfindungsgemäße Vorrichtung auch mehrere voneinander unabhängige Sensoren zur Überwachung einer Komponente umfassen kann. Außerdem lassen sich mit Hilfe der erfindungsgemäßen Vorrichtung auch mehrere voneinander unabhängige Komponenten überwachen. In beiden Fällen umfasst die erfindungsgemäße Vorrichtung dann ein ganzes Cluster von Sensoren und entsprechende Mittel zur Auswertung der Sensorsignale.

Wie bereits angedeutet, gibt es viele verschiedene Möglichkeiten zum Einsatz und damit zur Ausgestaltung des erfindungsgemäßen Verfahrens und der erfindungsgemäßen Vorrichtung.

So können beispielsweise die Vibrationen des Rahmens und/oder Lenkers mit Hilfe mindestens eines Beschleunigungssensors überwacht werden, um Belastungen zu erfassen, die oberhalb des Lastprofils der jeweiligen Komponente liegen. Erfindungsgemäß werden diese Belastungen aufsummiert und mit einer vorgegebenen Betriebsfestigkeitsgrenze für die Komponente verglichen, um den Fahrer bei Erreichen oder Überschreiten dieser Betriebsfestigkeitsgrenze auf die Möglichkeit eines Rahmen- bzw. Lenkerbruchs hinzuweisen.

Das Vibrationsspektrum kann weiterhin zur Abschätzung des Reifendrucks herangezogen werden. Dadurch kann der Fahrer auf einen zu geringen Reifendruck hingewiesen werden, um die Gefahr eines Plattens zu verringern.

Auch die Lebensdauer der Batterie bzw. des Akkus eines Elektrofahrrads kann mit Hilfe des erfindungsgemäßen Verfahrens überwacht werden. Dazu kann beispielsweise einfach die Anzahl der Ladezyklen erfasst werden, da diese einen limitierenden Faktor für die Lebensdauer der Batterie darstellt. Erfindungsgemäß wird der Fahrer dann automatisch rechtzeitig auf die Notwendigkeit eines Batteriewechsels hingewiesen, so dass er die Einsatzfähigkeit des Fahrrads sicherstellen kann.

Besonders wichtig im Hinblick auf die Verkehrssicherheit des Elektrofahrrads ist die Überwachung des Betriebszustands der Bremsen. Durch Beobachtung des Geschwindigkeitsverlaufs kann abgeschätzt werden, wann gebremst wurde und wie viel Energie durch das Bremsen abgebaut wurde. Daraus lässt sich abschätzen, wann die Bremsbeläge der Bremsanlage erneuert werden müssen. Alternativ oder ergänzend zum Geschwindigkeitsverlauf kann auch einfach die Anzahl der Bremsvorgänge erfasst werden, beispielsweise mit Hilfe eines Schalters, um diese dann mit einer vorbestimmten Maximalanzahl von Bremsvorgängen zu vergleichen.

Das Erfindungsgemäße Verfahrens besteht in der Überwachung der Komponenten des Kettenantriebs, da der Wirkungsgrad des Kettenantriebs wesentlich vom Zustand der Kette und der Kettenräder abhängt. Im Fall der Fahrradkette können der Verschleißerkennung unterschiedliche Kriterien zugrunde gelegt werden.

Bei einer Kettenschaltung hat die Anzahl der Schaltvorgänge einen wesentlichen Einfluss auf die Alterung der Kette. Dementsprechend wird der Verschleißerkennung der Kette in einer Variante des erfindungsgemäßen Verfahrens die Anzahl der Schaltvorgänge zugrunde gelegt.

Alternativ oder auch ergänzend dazu kann der Betriebszustand der Kette mit Hilfe mindestens eines Sensors überwacht werden, der die auf die Kette wirkenden Drehmomente und insbesondere kritische Drehmomente erfasst. Damit können sowohl die beim Schalten auftretenden Drehmomente erfasst werden als auch die mechanischen Belastungen der Kette im Fahrbetrieb. So kann mit Hilfe einer geeigneten Drehmomentsensorik beispielsweise bestimmt werden, wie oft kritische Drehmomente auftreten und wann eine bestimmte Betriebsfestigkeitsgrenze (Wöhlerkurve) überschritten ist, so dass die Notwendigkeit einer Wartung besteht.

Die Gangwahl ist entscheidend für den Verschleiß des Ritzelpakets. Häufiges Verwenden eines bestimmten Gangs führt zur vorzeitigen Abnutzung des entsprechenden Ritzels. Hier kann eine sensorgestützte Gangerkennung für eine präzise Evaluierung des Verschleißes eingesetzt werden.

Im erfindungsgemäßen Verfahrens wird der Motorstrom des Elektromotors erfasst, um den Betriebszustand der Kraft-/Moment-übertragenden Bauteile des Kettenantriebs zu überwachen. Erfindungsgemäß wird dazu der Rippelanteil dieses Stromsignals ermittelt und mit dem Rippelanteil eines Vergleichssignals verglichen. Das Vergleichssignal entspricht dem Stromsignal, das erfasst wird, wenn der Kettenantrieb mit einer neuwertigen Kette und neuwertigen Kettenrädern ausgestattet ist. Ein Verschleißzustand wird dann identifiziert, wenn die Abweichung zwischen dem Rippelanteil des erfassten Stromsignals und dem Rippelanteil des Vergleichssignals ein vorgegebenes Maß übersteigt. Wesentlich ist, dass sich im Rippelanteil des Motorstromsignals sowohl die Abnutzung der Kette als auch die Abnutzung der Kettenräder wiederspiegelt.

Die Verschleißerkennung anhand des Rippelanteils des Motorstromsignals basiert auf den folgenden Überlegungen:
Jeder Elektromotor besitzt eine eigene Drehmomentenwelligkeit, die auf sogenannte Rippelmomente zurückzuführen ist. Diese Rippelmomente treten unabhängig von der konkreten Topologie des Elektromotors auf und setzen sich typischerweise aus zwei Anteilen zusammensetzen, nämlich aus magnetischen Rastmomenten (Cogging torque) und elektrodynamischen Rastmomenten. Die magnetischen Rastmomente sind auf den mechanischen Aufbau des Elektromotors zurückzuführen, und zwar im Wesentlichen auf das Vorhandensein von Nuten im Rotor und/oder Stator und auf die magnetischen Pole im Falle einer permanenterregten elektrischen Maschine. Die elektrodynamischen Rastmomente sind auf die Bestromung des Motors und insbesondere auf die Stromwendung (Kommutierung) zurückzuführen. Im Falle eines DC-Motors ist die Kommutierung mechanisch realisiert. Sie kann aber auch elektronisch realisiert sein, wie im Falle eines BLDC-Motors.

Erfindungsgemäß ist erkannt worden, dass die Drehmomentenwelligkeit des Elektromotors durch die Art der Drehmomentübertragung des Kettenantriebs beeinflusst wird.

Die Fahrradkette umschließt ein Kettenrad wie ein Vieleck, so dass der wirksame Durchmesser des Rades schwankt. Dementsprechend schwankt bei konstanter Winkelgeschwindigkeit des antreibenden Kettenrades auch die Kettengeschwindigkeit. Dieser Effekt wird als Polygoneffekt bezeichnet. Insbesondere bei Kettenrädern mit einer kleineren Annzahl von Zähnen, wie sie im Kettenantrieb von Elektrofahrrädern verwendet werden, ist dieser Effekt stark ausgeprägt. Aufgrund des Polygoneffekts treten Zusatzkräfte auf, die sich auf die Drehmomentenwelligkeit des Elektromotors auswirken.

Längt sich die Kette, so ändert sich die wirksame Kettenteilung. Außerdem werden die Kettenräder verstärkt abgenutzt, wodurch sich der wirksame Durchmesser des antreibenden Kettenrades verändert. Beide Effekte beeinflussen die Drehmomentenwelligkeit des Elektromotors.

Die Drehmomentenwelligkeit des Elektromotors spiegelt sich in der Motorstromwelligkeit wieder, da zwischen dem Lastmoment M des Motors und dem gemessenen Motorstrom I der linearer Zusammenhang: M = k·Φ· I, besteht, wobei k·Φ eine Motorkonstante ist. Damit entspricht der Rippelanteil des Lastmoments M dem Rippelanteil des Motorstroms I.

Erfindungsgemäß wird auf der Basis des erfassten Motorstroms die verschleißbedingte Abweichung der Drehmomentenwelligkeit vom Neuzustand des Kettenantriebs ermittelt und ausgewertet.

Da ein Verschleiß am Kettenantrieb in der Regel zu einer Vergrößerung der Rippelamplitude führt, wird in einer vorteilhaften Variante des erfindungsgemäßen Verfahrens die Amplitude des Rippelanteils des erfassten Stromsignals mit der Amplitude des Rippelanteils des Vergleichssignals verglichen. Dazu kann aus dem Quotienten der maximalen Amplitude des Rippelanteils des erfassten Stromsignals und der Motorfrequenz eine Kenngröße gebildet werden, um diese mit der entsprechenden Kenngröße des Vergleichssignals zu vergleichen. In diesem Fall wird ein Verschleißzustand dann identifiziert, wenn die Amplitude bzw. die Kenngröße des erfassten Stromsignals signifikant größer ist als ein definierter Schwellwert.

Der Motorstrom kann mit Hilfe der bereits vorhandenen Sensorik eines Elektrofahrrads permanent überwacht werden. Da die Abnutzung der Drehmomentübertragenden Teile des Kettenantriebs aber nicht plötzlich auftritt, sondern der Verschleißzustand das Ergebnis einer dauerhaften Benutzung ist, muss das Stromsignal nicht kontinuierlich analysiert werden. Vielmehr reicht es aus, das Stromsignal regelmäßig zu analysieren. Es empfiehlt sich, die Signalanalyse jeweils für einen bestimmten Betriebsfall des Elektromotors vorzunehmen, um vergleichbare Ergebnisse zu erhalten. Dafür bietet sich der stationäre Betriebsfall an. In diesem Fall ist der gemittelte Motorstrom über eine vorgegebene Mindestdauer konstant, so dass eine Veränderung der Drehmomentenwelligkeit aufgrund von Beschleunigungs- oder Bremsvorgängen ausgeschlossen werden kann. Die Abweichung zwischen dem Rippelanteil des erfassten Stromsignals und dem Rippelanteil des Vergleichssignals kann automatisch, in bestimmten Zeitabständen ermittelt werden oder auch wahlweise, über eine entsprechende Benutzerschnittstelle initiiert, ermittelt werden.

Je nach Auswertealgorithmus kann es sinnvoll sein, einen Verschleißzustand nur dann anzuzeigen, wenn das Mittel der Abweichung zwischen dem Rippelanteil des erfassten Stromsignals und dem Rippelanteil des Vergleichssignals über eine bestimmte Dauer ein vorgegebenes Maß übersteigt.

### Kurze Beschreibung der Zeichnungen

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die dem unabhängigen Patentanspruch 1 nachgeordneten Patentansprüche verwiesen und andererseits auf die nachfolgende Beschreibung eines Ausführungsbeispiels der Erfindung anhand der Figuren.
- **Fig. 1**: zeigt das Blockschaltbild einer erfindungsgemäßen Vorrichtung zur Verschleißerkennung an einem Elektrofahrrad und
- **Fig. 2**: zeigt das Flussdiagramm des erfindungsgemäßen Verfahrens zur Verschleißerkennung,
- **Fig. 3**: zeigt einen möglichen Aufbau des Kettenantriebs eines Elektrofahrrads in schematischer Darstellung,
- **Fig. 4**: zeigt ein Schaltbild eines BLDC-Antriebs mit einem Sensor zur Motorstromerfassung,
- **Fig. 5**: veranschaulicht die Zusammensetzung und die Auswirkung des Rippelanteils auf das Lastmoment eines Elektromotors anhand eines Diagramms, das die Winkelabhängigkeit der einzelnen Signale wiedergibt, und
- **Fig. 6**: zeigt das Bediendisplay eines Elektrofahrrads, auf dem auch Wartungsinformationen angezeigt werden können.

### Ausführungsformen der Erfindung

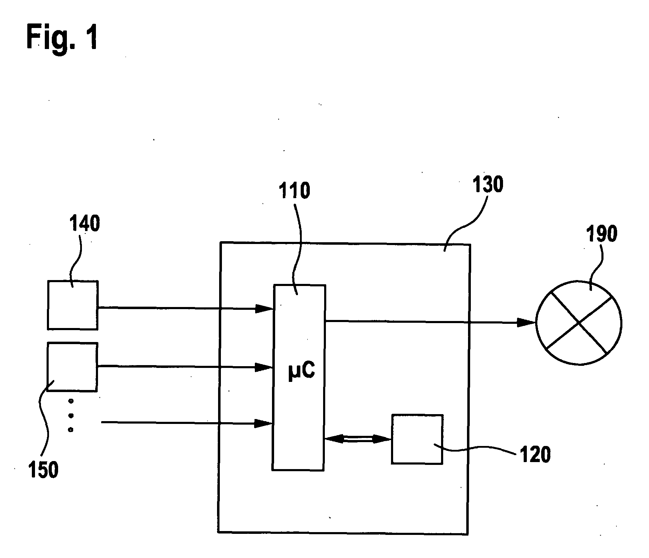

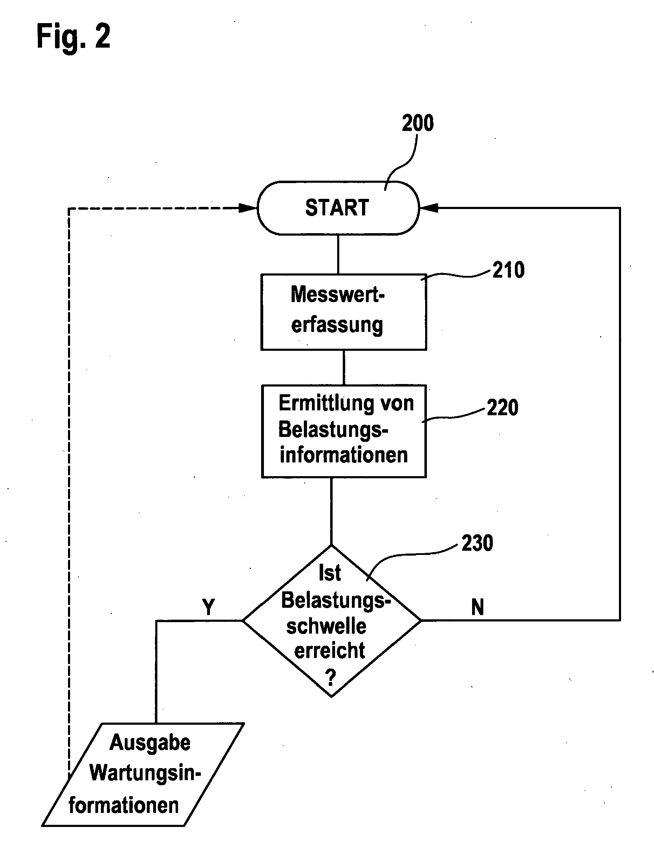

Das Blockschaltbild der **Fig. 1** veranschaulicht das Zusammenwirken der einzelnen Komponenten einer Vorrichtung 100 zur Verschleißerkennung an einem Elektrofahrrad gemäß dem im Flussdiagramm der **Fig. 2** dargestellten Verfahren. Die Vorrichtung 100 umfasst eine Reihe von Sensoren 140, 150, ..., die Informationen über den Betriebszustand und die Belastung der zu überwachenden Komponenten des Elektrofahrrads erfassen. Diese Sensorinformationen werden einem µC 110 zugeleitet, der zum Abspeichern und Abrufen von Daten mit einem Datenspeicher 120 verbunden ist. Der µC 110 bildet zusammen mit dem Datenspeicher 120 eine Auswerteeinheit 130. Schließlich umfasst die Vorrichtung 100 noch eine Anzeigeeinheit 190, die der µC 110 ansteuert, wenn die Auswertung der Sensorinformationen ergibt, dass eine vorgegebene Dauerbelastungsschwelle für eine oder mehrere der überwachten Fahrradkomponenten erreicht ist.

Das erfindungsgemäße Verfahren zur Verschleißerkennung kann entweder automatisch durchgeführt werden, beispielsweise immer oder in regelmäßigen Zeitintervallen während des Fahrbetriebs, oder auch manuell gestartet werden. In einem ersten Verfahrensschritt 210 nach dem Start 200 werden mit Hilfe der Sensoren 140, 150, ... Messgrößen erfasst. Auf der Basis dieser Messgrößen werden in einem weiteren Verfahrensschritt 220 Informationen über den Betriebszustand und die Belastung der zu überwachenden Fahrradkomponenten ermittelt. Im Verfahrensschritt 230 werden die so gewonnenen Informationen mit einer für die jeweilige Fahrradkomponente definierten Dauerbelastungsschwelle verglichen. Ist die Dauerbelastungsschwelle erreicht oder überschritten, werden entsprechende Wartungsinformationen auf der Anzeigeeinheit 190 angezeigt, bevor das Verfahren wiederholt wird. Andernfalls kehrt das Verfahren direkt zum Start 200 zurück.

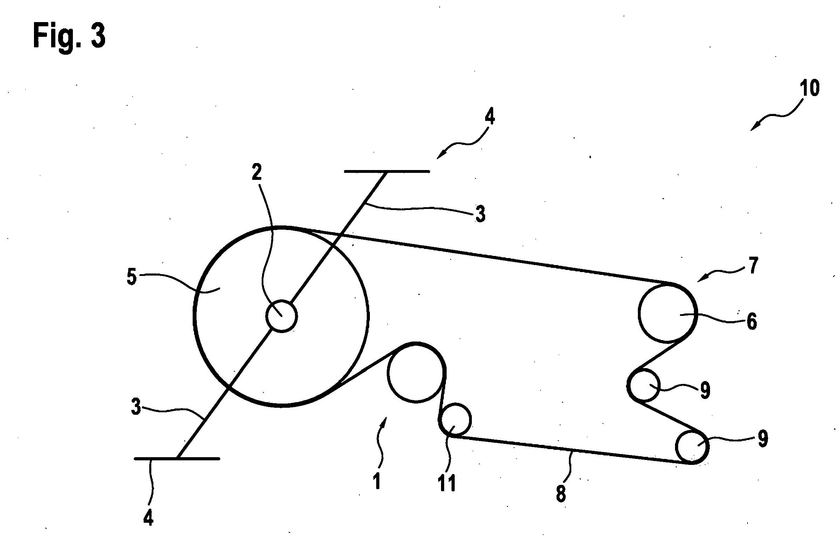

Das erfindungsgemäße Verfahren zur Verschleißerkennung an mindestens einer Komponente eines Elektrofahrrads wird nachfolgend beispielhaft für den in **Fig. 3** dargestellten Kettenantrieb 10 eines Elektrofahrrads beschrieben.

Dieser Kettenantrieb 10 umfasst einen Elektromotor 1, der die Antriebswelle 2 antreibt. Außerdem sitzen auf der Antriebswelle 2 die Kurbelarme 3 mit den Pedalen 4 für den Fahrer. Die Antriebswelle 2 ist mit mindestens einem Kettenblatt 5 ausgestattet. Die Hinterradachse bildet die Abtriebswelle 6 des Kettenantriebs 10. Auf der Abtriebswelle 6 sitzt mindestens ein Ritzel 7. Die Antriebswelle 2 und die Abtriebswelle 6 sind über eine geschlossene Kette 8 wirkverbunden, die über ein Kettenblatt 5 der Antriebswelle 2 und ein Ritzel 7 der Abtriebswelle 6 geführt ist. Auf diese Weise überträgt die Kette 8 das auf die Antriebswelle 2 wirkende Drehmoment auf die Abtriebswelle 6 und auf das Hinterrad. Schließlich umfasst der Kettenantrieb 10 noch eine Schaltschwinge mit zwei Kettenrädchen 9, die an der Hinterradachse angeordnet ist und Teil einer Kettenschaltung ist. Ein drittes Kettenrädchen 11 dient als Kettenführung zum Elektromotor 1.

Im hier dargestellten Ausführungsbeispiel ist der Elektromotor 1 im Bereich der Antriebswelle 2 angeordnet.

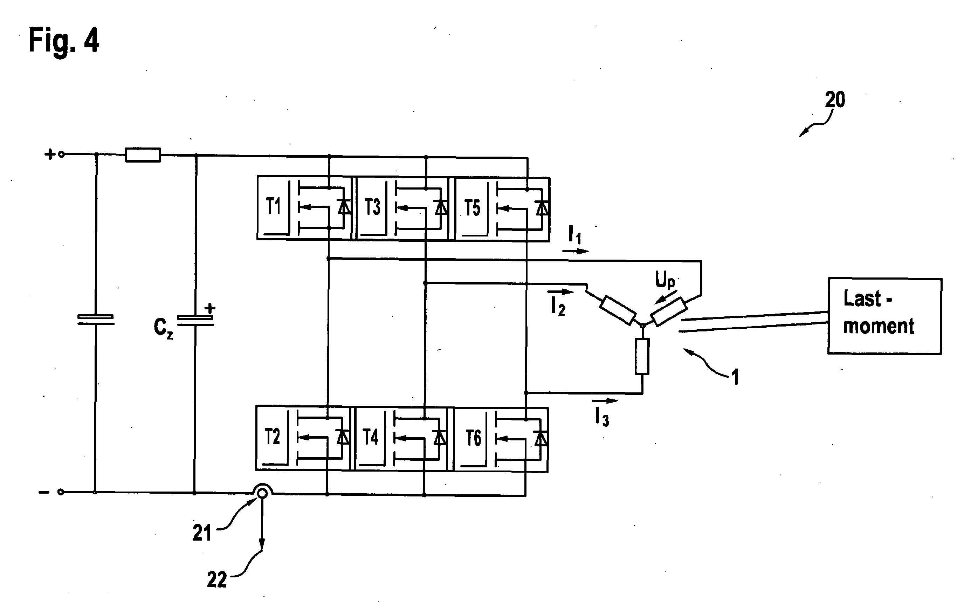

Bei dem Elektromotor 1 handelt es sich um einen BLDC-Motor. Die Kommutierung wird hier mit Hilfe der in **Fig. 4** dargestellten Ansteuer- Schaltung 20 realisiert. Diese Schaltung 20umfasst einen Stromsensor 21, mit dem der Motorstrom erfasst wird. Der Pfeil 22 deutet an, dass das Stromsignal einer Auswerteeinheit zugeleitet wird. Durch entsprechende Auswertung des Motorstromsignals kann der Zustand der Kette und Kettenräder des Kettenantriebs überwacht werden und rechtzeitig auf einen Verschleiß am Kettenantrieb hingewiesen werden.

Dazu wird der Rippelanteil des erfassten Stromsignals ermittelt und mit dem Rippelanteil eines Vergleichssignals verglichen, nämlich mit dem Rippelanteil des Stromsignals, das beim Betrieb des Elektromotors mit neuwertigem Kettenantrieb erfasst wurde.

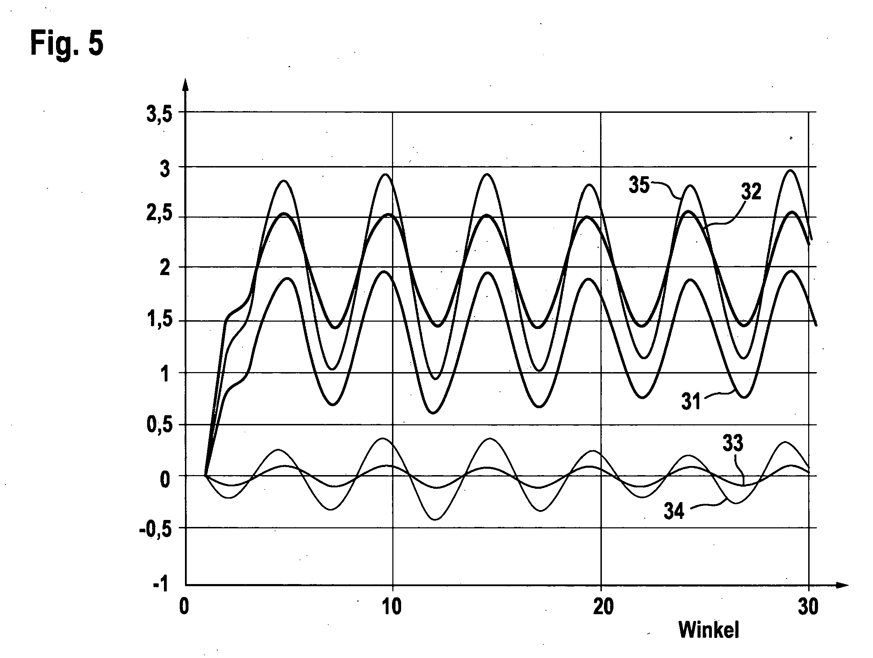

Zwischen dem Motorstrom I und dem Lastmoment M des Elektromotors besteht ein linearer Zusammenhang M = k·Φ·I. Deshalb entspricht auch der Rippelanteil, d.h. die winkelabhängige Welligkeit, des gemessenen Motorstroms dem Rippelanteil des Lastmoments des Elektromotors. Dies wird durch das Diagramm in **Fig. 5** veranschaulicht, insbesondere durch die Kurven 31, die die Winkelabhängigkeit des Motorstroms darstellt, und die Kurve 32, die die Winkelabhängigkeit des Motor-Lastmoments wiedergibt. Dieses Motorlastmoment wird von magnetischen Rastmomenten, der sogenannten cogging torque, und elektrodynamischen Rastmomenten überlagert. Deren Winkelabhängigkeit ist hier in den Kurven 33 und 34 dargestellt. Daraus ergibt sich die Kurve 35 als Gesamtmoment des Elektromotors 10.

Bei einem Verschleiß des Kettenantriebs treten zusätzliche Rastmomente auf, die das Gesamtmoment des Elektromotors und insbesondere den Rippelanteil des Gesamtmoments und damit auch des Motorstroms verstärken. Aus der Amplitude des Rippelanteils lässt sich eine Kenngröße, beispielsweise der Quotient aus maximaler Amplitude des Rippelanteils und Motorfrequenz, ableiten, die dann einfach mit einem vorgegebenen Schwellwert verglichen werden kann. Dieser Schwellwert wird ausgehend von der entsprechenden Kenngröße des Vergleichssignals bestimmt und in einem Speicher der Motorsteuerung 20 abgelegt.

Obwohl der Motorstrom kontinuierlich erfasst wird, reicht es aus, den Rippelanteil des Stromsignals bzw. dessen Kenngröße in regelmäßigen Abständen zu ermitteln und mit dem abgespeicherten Schwellwert zu vergleichen. Dies erfolgt vorteilhafterweise automatisch, kann aber auch über eine entsprechende Schnittstelle vom Fahrer initiiert werden.

Der Zustand des Kettenantriebs wird erst dann als Verschleißzustand identifiziert, wenn die Kenngröße des gemessenen Stromsignals den abgespeicherten Schwellwert signifikant überschreitet. In diesem Zusammenhang erweist es sich als sinnvoll, dem Schwellwertvergleich einen Mittelwert aus mehreren aufeinanderfolgenden Messungen zugrunde zu legen oder eine Vergleichshysteres einzubauen.

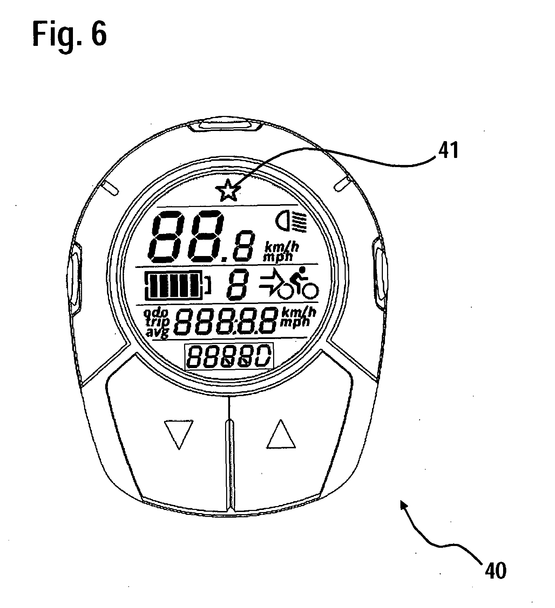

Ist die Verschleißgrenze erreicht, wird ein Wartungshinweis an den Fahrer abgesetzt, beispielsweise durch ein entsprechendes Symbol 41 auf einem Bediendisplay 40, wie es in **Fig. 6** dargestellt ist. Bei dem Symbol 41 handelt es sich um die Darstellung einer Kette als Zeichen dafür, dass die Kette ersetzt werden sollte. Als weiteres Symbol kann eine Kette mit einem Ritzel dargestellt werden, um darauf hinzuweisen, dass sowohl die Kette als auch ein Ritzel ersetz werden müssen. Nach entsprechender Wartung wird die Anzeige entweder manuell oder automatisch zurückgesetzt, da die ermittelte Kenngröße des Stromsignals nun wieder unterhalb des Schwellwerts liegt.

Auf einem größeren Display können dem Fahrer auch detailliertere Informationen über den Zustand des Kettenantriebs und die erforderlichen Wartungsmaßnahmen gegeben werden.

## Patentansprüche

1. Verfahren zur Verschleißerkennung an mindestens dem Kettenantriebeines Elektrofahrrads,
wobei der Kettenantrieb (10)
• einen Elektromotor (1), der mindestens eine Antriebswelle (2) mit mindestens einem Kettenrad (5) antreibt,
• mindestens eine Abtriebswelle (6), die ebenfalls mit mindestens einem Kettenrad (7) ausgestattet ist, und
• mindestens eine geschlossene Kette (8), die über ein Kettenrad (5) der Abtriebswelle (2) und ein Kettenrad (7) der Abtriebswelle (6) geführt ist, so dass die Kette (8) das auf die Antriebswelle (2) wirkende Drehmoment auf die Abtriebswelle (6) überträgt,
umfasst, und
zur Verschleißerkennung
• der Betriebszustand der Kette des Fahrrads mit Hilfe mindestens eines Sensors (140, 150, ...) überwacht wird und die Belastung der Kette über die Betriebsdauer erfasst wird, und
• die Notwendigkeit der Wartung auf einer Anzeigeeinheit (190) angezeigt wird, sobald eine für die Kette definierte Dauerbelastungsschwelle erreicht ist,
wobei,
• der Motorstrom erfasst wird,
• der Rippelanteil dieses Stromsignals ermittelt wird und mit dem Rippelanteil eines Vergleichssignals verglichen wird, wobei das Vergleichssignal dem Stromsignal entspricht, das erfasst wird, wenn der Kettenantrieb mit einer neuwertigen Kette und neuwertigen Kettenrädern ausgestattet ist, und
• ein Verschleißzustand dann identifiziert wird, wenn die Abweichung zwischen dem Rippelanteil des erfassten Stromsignals und dem Rippelanteil des Vergleichssignals ein vorgegebenes Maß übersteigt.

2. Verfahren nach Anspruch 1, **dadurch gekennzeichnet, dass** Vibrationen des Rahmens und/oder Lenkers mit Hilfe mindestens eines Beschleunigungssensors erfasst werden und dass angezeigt wird, sobald eine vorgegebene Betriebsfestigkeitsgrenze erreicht oder überschritten wird.

3. Verfahren nach einem der Ansprüche 1 oder 2, **dadurch gekennzeichnet, dass** die Anzahl der Ladezyklen der Fahrzeugbatterie mit Hilfe mindestens eines Sensors erfasst wird und dass angezeigt wird, sobald eine vorgegebene Anzahl von Ladezyklen erreicht oder überschritten wird.

4. Verfahren nach einem der Ansprüche 1 bis 3, **dadurch gekennzeichnet, dass** zusätzlich
• der Betriebszustand der Bremsen mit Hilfe mindestens eines Sensors überwacht wird, indem der Geschwindigkeitsverlauf des Fahrzeugs erfasst wird und/oder die Anzahl der Bremsvorgänge erfasst bzw. ermittelt wird, und
• die Belastung der Bremse über die Betriebsdauer erfasst wird, und
• die Notwendigkeit der Wartung auf einer Anzeigeeinheit (190) angezeigt wird, sobald eine für die Bremse definierte Dauerbelastungsschwelle erreicht ist.

5. Verfahren nach einem der Ansprüche 1 bis 4, **dadurch gekennzeichnet, dass** der Betriebszustand der Kette mit Hilfe mindestens eines Sensors überwacht wird, der die Anzahl der Schaltvorgänge erfasst.

6. Verfahren nach einem der Ansprüche 1 bis 5, **dadurch gekennzeichnet, dass** der Betriebszustand der Kette mit Hilfe mindestens eines Sensors überwacht wird, der die eingebrachten Drehmomente und insbesondere kritische Drehmomente erfasst.

7. Verfahren nach einem der Ansprüche 1 bis 6, **dadurch gekennzeichnet, dass** der Betriebszustand der Kette mit Hilfe mindestens eines Sensors überwacht wird, der die zurückgelegte Fahrstrecke erfasst.

8. Verfahren nach einem der Ansprüche 1 bis 7, **dadurch gekennzeichnet, dass** der Betriebszustand der Kette mit Hilfe mindestens eines Sensors überwacht wird, der den eingelegten Gang erfasst.

9. Verfahren nach einem der Ansprüche 1 bis 8 **dadurch gekennzeichnet, dass** ein Beschleunigungssensor einen zu geringen und/oder zu hohen Reifendruck erkennt.

10. Verfahren nach Anspruch 1, **dadurch gekennzeichnet, dass** die Amplitude des Rippelanteils des erfassten Stromsignals mit der Amplitude des Rippelanteils des Vergleichssignals verglichen wird.

11. Verfahren nach Anspruch 10, **dadurch gekennzeichnet, dass** aus dem Quotienten der maximalen Amplitude des Rippelanteils des erfassten Stromsignals und der Motorfrequenz eine Kenngröße gebildet wird, die mit der entsprechenden Kenngröße des Vergleichssignals verglichen wird.

12. Verfahren nach einem der Ansprüche 10 oder 11, **dadurch gekennzeichnet, dass** ein Verschleißzustand dann identifiziert wird, wenn die Amplitude bzw. die Kenngröße des erfassten Stromsignals signifikant größer ist als ein definierter Schwellwert.

13. Verfahren nach einem der Ansprüche 1 oder 10 bis 12, **dadurch gekennzeichnet, dass** die Abweichung zwischen dem Rippelanteil des erfassten Stromsignals und dem Rippelanteil des Vergleichssignals lediglich im stationären Betriebsfall des Elektromotors ermittelt wird, d.h. wenn der gemittelte Motorstrom über eine vorgegebene Mindestdauer konstant ist.

14. Verfahren nach einem der Ansprüche 1 oder 10 bis 13, **dadurch gekennzeichnet, dass** die Abweichung zwischen dem Rippelanteil des erfassten Stromsignals und dem Rippelanteil des Vergleichssignals automatisch, in bestimmten Zeitabständen ermittelt wird.

15. Verfahren nach einem der Ansprüche 1 oder 10 bis 14, **dadurch gekennzeichnet, dass** die Ermittlung der Abweichung zwischen dem Rippelanteil des erfassten Stromsignals und dem Rippelanteil des Vergleichssignals wahlweise über eine entsprechende Benutzerschnittstelle initiierbar ist.

16. Verfahren nach einem der Ansprüche 1 oder 7 bis 12, **dadurch gekennzeichnet, dass** ein Verschleißzustand nur dann angezeigt wird, wenn das Mittel der Abweichung zwischen dem Rippelanteil des erfassten Stromsignals und dem Rippelanteil des Vergleichssignals über eine bestimmte Dauer ein vorgegebenes Maß übersteigt.

17. Vorrichtung (100) zur Verschleißerkennung an mindestens dem Kettenantrieb eines Elektrofahrrads, insbesondere zur Durchführung eines Verfahrens nach einem der Ansprüche 1 bis 16,
wobei der Kettenantrieb (10)
• einen Elektromotor (1), der mindestens eine Antriebswelle (2) mit mindestens einem Kettenrad (5) antreibt,
• mindestens eine Abtriebswelle (6), die ebenfalls mit mindestens einem Kettenrad (7) ausgestattet ist, und
• mindestens eine geschlossene Kette (8), die über ein Kettenrad (5) der Antriebswelle (2) und ein Kettenrad (7) der Abtriebswelle (6) geführt ist, so dass die Kette (8) das auf die Antriebswelle (2) wirkende Drehmoment auf die Abtriebswelle (6) überträgt,
umfasst,
wobei die Vorrichtung (100) zur Verschleißerkennung
• mindestens einen Sensor (140, 150, ...) zum Überwachen des Betriebszustands mindestens der Kette des Kettenantriebs des Elektrofahrrads und zum Erfassen der Belastung Kette, und
• eine Auswerteeinheit (130) mit mindestens einem Speicher (120) zur Auswertung der erfassten Sensorinformationen über den Betriebszustand und die Belastung der Kette des Fahrrads mit Hilfe mindestens des einen Sensors (140, 150, ...) und
• mindestens eine Anzeigeeinheit (190) zur Wiedergabe von Wartungsinformationen, wenn ein vorgegebener Verschleißzustand für die Kette erreicht ist
umfasst,
wobei
die Auswerteeinheit (130)
• mittels eines Stromsensors (21) den Motorstrom erfasst, und
• den Rippelanteil dieses Stromsignals ermittelt und mit dem Rippelanteil eines Vergleichssignals vergleicht, wobei das Vergleichssignal dem Stromsignal entspricht, das erfasst wird, wenn der Kettenantrieb mit einer neuwertigen Kette und neuwertigen Kettenrädern ausgestattet ist, und
• einen Verschleißzustand identifiziert, wenn die Abweichung.zwischen dem Rippelanteil des erfassen Stromsignals und dem Rippelanteil des Vergleichssignals ein vorgegebenes Maß übersteigt und
• die Anzeigeeinheit (190) zur Widergabe einer Wartubgsinformation ansteuert, wenn die Auswertung der Sensorinformationen ergibt, dass für die Kette eine definierter Verschleißzustand erreicht ist.

## Claims

1. Method for detecting wear on at least the chain drive of an electric bicycle,
wherein the chain drive (10) comprises
- an electric motor (1), which drives at least one input shaft (2) with at least one chain wheel (5),
- at least one output shaft (6), which is likewise equipped with at least one chain wheel (7), and
- at least one closed chain (8), which is guided via a chain wheel (5) of the input shaft (2) and a chain wheel (7) of the output shaft (6), with the result that the chain (8) transfers the torque acting on the input shaft (2) to the output shaft (6),
and,
in order to detect the wear,
- the operating state of the chain of the bicycle is monitored using at least one sensor (140, 150, etc.) and the loading of the chain is acquired using the operating period, and
- the need for maintenance is indicated on a display unit (190) provided that a continuous loading threshold defined for the chain has been reached,
wherein
- the motor current is acquired,
- the ripple component of said current signal is calculated and compared with the ripple component of a comparison signal, wherein the comparison signal corresponds to the current signal which is acquired when the chain drive is equipped with a new chain and new chain wheels, and
- a state of wear is identified if the deviation between the ripple component of the acquired current signal and the ripple component of the comparison signal exceeds a predefined measure.

2. Method according to Claim 1, **characterized in that** vibrations of the frame and/or handlebar are acquired using at least one acceleration sensor and **in that** it is displayed provided that a predefined operational stability limit is reached or exceeded.

3. Method according to either of Claims 1 and 2, **characterized in that** the number of charging cycles of the vehicle battery is acquired using at least one sensor and **in that** it is displayed provided a predefined number of charging cycles is reached or exceeded.

4. Method according to any of Claims 1 to 3, **characterized in that**, in addition,
- the operating state of the brakes is monitored using at least one sensor, by virtue of the speed profile of the vehicle being acquired and/or the number of braking processes being acquired or calculated, and
- the loading of the brakes over the operating period is acquired, and
- the need for maintenance is indicated on a display unit (190) provided that a continuous loading threshold defined for the brakes has been reached.

5. Method according to any of Claims 1 to 4, **characterized in that** the operating state of the chain is monitored using at least one sensor which acquires the number of switching processes.

6. Method according to any of Claims 1 to 5, **characterized in that** the operating state of the chain is monitored using at least one sensor which acquires the applied torques and, in particular, critical torques.

7. Method according to any of Claims 1 to 6, **characterized in that** the operating state of the chain is monitored using at least one sensor which acquires the travelled route.

8. Method according to any of Claims 1 to 7, **characterized in that** the operating state of the chain is monitored using at least one sensor which acquires the selected gear.

9. Method according to any of Claims 1 to 8, **characterized in that** an acceleration sensor detects a tyre pressure which is too low and/or too high.

10. Method according to Claim 1, **characterized in that** the amplitude of the ripple component of the acquired current signal is compared with the amplitude of the ripple component of the comparison signal.

11. Method according to Claim 10, **characterized in that** a characteristic variable is formed from the quotients of the maximum amplitude of the ripple component of the acquired current signal and the motor frequency, which characteristic variable is compared with the corresponding characteristic variable of the comparison signal.

12. Method according to either of Claims 10 and 11, **characterized in that** a state of wear is identified if the amplitude or the characteristic variable of the acquired current signal is significantly greater than a defined threshold value.

13. Method according to any of Claims 1 and 10 to 12, **characterized in that** the deviation between the ripple component of the acquired current signal and the ripple component of the comparison signal is only calculated in the stationary operating state of the electric motor, that is to say when the measured motor current is constant over a predefined minimum period.

14. Method according to any of Claims 1 and 10 to 13, **characterized in that** the deviation between the ripple component of the acquired current signal and the ripple component of the comparison signal is automatically calculated at certain intervals.

15. Method according to any of Claims 1 and 10 to 14, **characterized in that** the calculation of the deviation between the ripple component of the acquired current signal and the ripple component of the comparison signal can be initiated selectively via a corresponding user interface.

16. Method according to any of Claims 1 and 7 to 12, **characterized in that** a state of wear is only indicated if the average of the deviation between the ripple component of the acquired current signal and the ripple component of the comparison signal exceeds a predefined measure over a certain period.

17. Device (100) for detecting wear on at least the chain drive of an electric bicycle, in particular for performing a method according to any of Claims 1 to 16, wherein the chain drive (10) comprises
- an electric motor (1), which drives at least one input shaft (2) with at least one chain wheel (5),
- at least one output shaft (6), which is likewise equipped with at least one chain wheel (7), and
- at least one closed chain (8), which is guided via a chain wheel (5) of the input shaft (2) and a chain wheel (7) of the output shaft (6), with the result that the chain (8) transfers the torque acting on the input shaft (2) to the output shaft (6),
wherein, in order to detect the wear, the device (100) comprises
- at least one sensor (140, 150, etc.) for monitoring the operating state of at least the chain of the chain drive of the electric vehicle and for acquiring the loading of the chain, and
- an evaluation unit (130) with at least one memory (120) for evaluating the acquired sensor information relating to the operating state and the loading of the chain of the bicycle using at least the one sensor (140, 150, etc.), and
- at least one display unit (190) for showing maintenance information if a predefined state of wear of the chain has been reached,
wherein
the evaluation unit (130)
- acquires the motor current using a current sensor (21), and
- calculates the ripple component of said current signal and compares it to the ripple component of a comparison signal, wherein the comparison signal corresponds to the current signal which is acquired when the chain drive is equipped with a new chain and new chain wheels, and
- identifies a state of wear if the deviation between the ripple component of the acquired current signal and the ripple component of the comparison signal exceeds a predefined measure, and
- actuates the display unit (190) for showing maintenance information if the result of the evaluation of the sensor information is that a defined state of wear of the chain has been reached.

## Revendications

1. Procédé de détection d'usure sur au moins l'entraînement par chaîne d'une bicyclette électrique,
pour lequel l'entraînement par chaîne (10) comprend
• un moteur électrique (1) qui entraîne au moins un arbre de transmission (2) avec au moins une roue dentée (5),
• au moins un arbre de transmission (6) qui est également équipé d'au moins une roue dentée (7), et
• au moins une chaîne fermée (8) qui est guidée sur une roue dentée (5) de l'arbre de transmission (2) et une roue dentée (7) de l'arbre de transmission (6) de sorte que la chaîne (8) transmet le couple agissant sur l'arbre de transmission (2) à l'arbre de transmission (6), et
pour la détection d'usure
• l'état de fonctionnement de la chaîne de la bicyclette est surveillé à l'aide d'au moins un capteur (140, 150,...) et la charge de la chaîne est saisie pendant la durée de fonctionnement, et
• la nécessité d'entretien est affichée sur une unité d'affichage (190) dès qu'un seuil de charge permanente défini pour la chaîne est atteint,
pour lequel,
• le courant du moteur est saisi,
• la partie d'ondulation de ce signal de courant est déterminée et comparée à la partie d'ondulation d'un signal de comparaison pour lequel le signal de comparaison correspond au signal qui est saisi, lorsque l'entraînement à chaîne est équipé d'une chaîne neuve et de roues dentées neuves, et
• un état d'usure est ensuite identifié, lorsque l'écart entre la partie d'ondulation du signal de courant saisi et la partie d'ondulation du signal de comparaison dépasse une mesure préalablement définie.

2. Procédé selon la revendication 1 **caractérisé en ce que** les vibrations du cadre et/ou du guidon sont saisies à l'aide au moins d'un capteur d'accélération et **en ce qu'**il est affiché dès qu'une limite de résistance au fonctionnement préalablement définie est atteinte ou dépassée.

3. Procédé selon l'une quelconque des revendications 1 ou 2 **caractérisé en ce que** le nombre de cycles de charge de la batterie du véhicule est saisi à l'aide d'au moins un capteur et **en ce qu'**il est affiché dès qu'un nombre préalablement défini de cycles de charge est atteint ou dépassé.

4. Procédé selon l'une quelconque des revendications 1 à 3 **caractérisé en ce qu'**en plus
• l'état de fonctionnement des freins est surveillé à l'aide d'au moins un capteur, en saisissant la courbe de vitesse du véhicule et/ou en saisissant ou déterminant le nombre de cycles de freinage, et
• la charge du frein est saisie sur la durée de fonctionnement, et
• la nécessité d'entretien est affichée sur une unité d'affichage (190) dès qu'un seuil de charge permanente défini pour le frein est atteint.

5. Procédé selon l'une quelconque des revendications 1 à 4 **caractérisé en ce que** l'état de fonctionnement de la chaîne est surveillé à l'aide d'au moins un capteur qui saisit le nombre des cycles de commutation.

6. Procédé selon l'une quelconque des revendications 1 à 5 **caractérisé en ce que** l'état de fonctionnement de la chaîne est surveillé à l'aide d'au moins un capteur qui saisit les couples appliqués et en particulier les couples critiques.

7. Procédé selon l'une quelconque des revendications 1 à 6 **caractérisé en ce que** l'état de fonctionnement de la chaîne est surveillé à l'aide d'au moins un capteur qui saisit la distance parcourue.

8. Procédé selon l'une quelconque des revendications 1 à 7 **caractérisé en ce que** l'état de fonctionnement de la chaîne est surveillé à l'aide d'au moins un capteur qui saisit la vitesse enclenchée.

9. Procédé selon l'une quelconque des revendications 1 à 8 **caractérisé en ce qu'**un capteur d'accélération identifie une pression de pneumatique trop faible et/ou trop élevée.

10. Procédé selon la revendication 1 **caractérisé en ce que** l'amplitude de la partie d'ondulation du signal de courant est comparée à l'amplitude de la partie d'ondulation du signal de comparaison.

11. Procédé selon la revendication 10 **caractérisé en ce qu'**à partir du quotient de l'amplitude maximale de la partie d'ondulation du signal de courant saisi et la fréquence du moteur une valeur caractéristique est constituée qui est comparée à la valeur caractéristique correspondante du signal de comparaison.

12. Procédé selon l'une quelconque des revendications 10 ou 11 **caractérisé en ce qu'**un état d'usure est ensuite identifié, lorsque l'amplitude ou la valeur caractéristique du signal de courant saisi est significativement plus grande qu'une valeur seuil définie.

13. Procédé selon l'une quelconque des revendications 1 ou 10 à 12 **caractérisé en ce que** l'écart entre la partie d'ondulation du signal de courant saisi et la partie d'ondulation du signal de comparaison n'est déterminé qu'en cas de fonctionnement stationnaire du moteur électrique, c'est-à-dire lorsque le courant du moteur moyen est constant sur une durée minimum préalablement définie.

14. Procédé selon l'une quelconque des revendications 1 ou 10 à 13 **caractérisé en ce que** l'écart entre la partie d'ondulation du signal de courant saisi et la partie d'ondulation du signal de comparaison est déterminé automatiquement à certains intervalles de temps.

15. Procédé selon l'une quelconque des revendications 1 ou 10 à 14 **caractérisé en ce que** la détermination de l'écart entre la partie d'ondulation du signal de courant saisi et la partie d'ondulation du signal de comparaison peut être initiée sélectivement par une interface d'utilisateur correspondante.

16. Procédé selon l'une quelconque des revendications 1 ou 7 à 12 **caractérisé en ce qu'**un état d'usure n'est affiché que lorsque la moyenne de l'écart entre la partie d'ondulation du signal de courant saisi et la partie d'ondulation du signal de comparaison dépasse une mesure préalablement définie sur une certaine durée.

17. Dispositif (100) de détection d'usure sur au moins l'entraînement par chaîne d'une bicyclette électrique, en particulier pour exécuter un procédé selon les revendications 1 à 16,
pour lequel l'entraînement par chaîne (10) comprend
• un moteur électrique (1) qui entraîne au moins un arbre de transmission (2) avec au moins une roue dentée (5),
• au moins un arbre de transmission (6) qui est également équipé d'au moins une roue dentée (7), et
• au moins une chaîne fermée (8) qui est guidée sur une roue dentée (5) de l'arbre de transmission (2) et une roue dentée (7) de l'arbre de transmission (6) de sorte que la chaîne (8) qui transmet le couple agissant sur l'arbre de transmission (2) à l'arbre de transmission (6),
pour lequel le dispositif (100) pour la détection d'usure comprend
• au moins un capteur (140, 150...) pour surveiller l'état de fonctionnement au moins de la chaîne de l'entraînement par chaîne de la bicyclette électrique et saisir la charge de la chaîne, et
• une unité d'exploitation (130) avec au moins une mémoire (120) pour exploiter les informations de capteur saisies sur l'état de fonctionnement et la charge de la chaîne de la bicyclette à l'aide d'au moins un capteur (140, 150...) et
• au moins une unité d'affichage (190) pour retransmettre des informations d'entretien lorsqu'un état d'usure préalablement défini pour la chaîne est atteint,
pour lequel
l'unité d'exploitation (130)
• saisit le courant du moteur au moyen d'un capteur de courant (21), et
• détermine la partie d'ondulation de ce signal de courant et la compare à la partie d'ondulation d'un signal de comparaison, pour lequel le signal de comparaison correspond au signal de courant qui est saisi lorsque l'entraînement par chaîne est équipé d'une chaîne neuve et de roues dentées neuves,
et
• identifie l'état d'usure, lorsque l'écart entre la partie d'ondulation du signal de courant saisi et la partie d'ondulation du signal de comparaison dépasse une mesure préalablement définie et
• pilote l'unité d'affichage (190) pour retransmettre une information d'entretien lorsqu'il ressort de l'exploitation des informations de capteur qu'un état d'usure défini pour la chaîne est atteint.
